# EUROPÄISCHE PATENTSCHRIFT

(11) **EP 2 083 028 B1**
(45) Veröffentlichungstag und Bekanntmachung des Hinweises auf die Patenterteilung: **25.08.2010**
(21) Anmeldenummer: 09000323.7
(22) Anmeldetag: 13.01.2009
(51) Int. Cl.: C08G 18/66, C08G 18/32, C08G 18/73

(54) **Thermoplastische Polyurethane und deren Verwendung**
Thermoplastic polyurethane and its utilisation
Polyuréthane thermoplastique et son utilisation

(30) Priorität: 25.01.2008 DE 102008006003
(43) Veröffentlichungstag der Anmeldung: 29.07.2009
(73) Patentinhaber: Bayer MaterialScience AG, 51368 Leverkusen (DE)
(72) Erfinder: Peerlings, Henricus, Dr., 42699 Solingen (DE); Shafiq, Faisal, Dr., 41564 Kaarst (DE); Broich, Markus, 41836 Hückelhoven (DE)

(56) Entgegenhaltungen:
- EP-A- 1 336 631
- EP-A- 1 674 494
- WO-A-2008/057101

## Beschreibung

Die vorliegende Erfindung betrifft lichtstabile, transparente, thermoplastische Polyurethanformmassen auf Basis 1,6-Hexamethylendiisocyanat mit einer Trübung von weniger als 10% gemäß ASTM D 1003 mit guter technischer Verarbeitbarkeit sowie deren Verwendung.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponente in einer Stufe (one-shot-Dosierverfahren) erfolgen.

Bei der Verwendung von aliphatischen lichtstabilen transparenten Materialien werden zumeist Materialien auf Basis H₁₂-MDI eingesetzt, die jedoch als Nachteil ein schlechtes Verfestigungsverhalten haben. Daher sind aliphatische lichtstabile transparente TPU auf Basis anderer Materialien, wie z.B. HDI (Hexamethylendiisocyanat) als Diisocyanat wünschenswert, wobei diese TPU jedoch zu trüb für solche Anwendungen sind.

In WO 02/050151 werden transparente TPU auf Basis Ethylenoxid-, oder Ethylenoxid-, Propylenoxid-Polyolen mit Misch-Kettenverlängerung beschrieben, wobei eine der Kettenverlängerungskomponenten aus der Gruppe Ethylenglykol, Diethylenglykol oder 1,3-Propandiol ausgewählt ist. In den Beispielen werden nur TPU auf Basis aromatischer Isocyanate beschrieben, die nicht lichtstabil sind.

Aufgabe der vorliegenden Erfindung war es daher, thermoplastische, lichtstabile Polyurethane (TPU) auf Basis 1,6-Hexamethylendiisocyanat zur Verfügung zu stellen, die eine Trübung von weniger als 10% gemäß ASTM D-1003 bei gleichzeitig guter technischer Verarbeitbarkeit aufweisen.

Diese Aufgabe konnte überraschenderweise durch TPUs mit einer speziellen Zusammensetzung gelöst werden.

Gegenstand der vorliegenden Erfindung sind daher lichtstabile, thermoplastische Polyurethane mit einer Trübung von weniger als 10% gemäß ASTM D-1003, die erhältlich sind aus
a) 1,6-Hexamethylendiisocyanat (1,6-HDI) und ggf. weiteren von 1,6-HDI verschiedenen aliphatischen Diisocyanaten,
b) einer Kettenverlängerungskomponente bestehend aus
   b1) 1,4-Di(β-hydroxyethyl)-hydrochinon und
   b2) mindestens einem Kettenverlängerer bestehend aus einem Diol mit 2 oder 3 Kohlenstoffatomen in der Kette zwischen den beiden OH-Gruppen,
      wobei das molare Verhältnis des Kettenverlängerers b1) zum Kettenverlängerer b2) 10:1 bis 1:4 beträgt,
c) mindestens einer Polyol-Komponente mit einem zahlenmittleren Molekulargewicht von 450 bis 10 000 g/mol und im Mittel mindestens 1,8 bis höchstens 3,0 zerewitinoff-aktiven Wasserstoffatomen,
   wobei das Verhältnis der Anzahl der Isocyanatgruppen in Komponente a) zu der Anzahl der gegenüber Isocyanat reaktiven Gruppen in den Komponenten b), c) und gegebenenfalls g) 0,9:1 bis 1,1:1 beträgt,
   gegebenenfalls in Gegenwart von
d) Katalysatoren
   und unter Zusatz von
e) 0,1 bis 10 Gew.-%, bezogen auf thermoplastisches Polyurethan, Lichtstabilisatoren,
f) gegebenenfalls Zusatzmitteln und/oder Hilfsstoffen,
g) gegebenenfalls Kettenabbrechern.

Als organische Diisocyanate a) können neben 1,6-Hexamethylendiisocyanat als Hauptkomponente folgende aliphatische Diisocyanate als Nebenkomponente (bis zu 30 Mol-%) zum Einsatz kommen: Ethylendiisocyanat, 1,4-Tetramethylendiisocyant, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische. Vorzugsweise verwendet werden 1,4-Cyclohexandiisocyanat, Isophorondiisocyanat und Dicyclohexylmethandiisocyanat. Die genannten Diisocyanate können einzeln oder in Form von Mischungen untereinander zur Anwendung kommen. Sie können auch zusammen mit bis zu 15 Mol-% (bezogen auf Gesamt-Isocyanatkomponente) eines Polyisocyanates verwendet werden, es darf aber höchstens soviel Polyisocyanat zugesetzt werden, dass ein noch thermoplastisch verarbeitbares Produkt entsteht.

Als Kettenverlängerer b2) wird ein Diol mit 2 oder 3 Kohlenstoffatomen zwischen den beiden OH-Gruppen [HO-(-C(R')(R")-)-_{2 oder 3}OH, wobei R' und R" unabhängig voneinander Alkylgruppen mit 1 bis 6 C-Atomen darstellen] eingesetzt, bevorzugt aus der Gruppe bestehend aus 1,2-Ethylenglykol, 1,2-Propandiol, 1,3-Propandiol, 2,2-Dimethyl-1,3-Propandiol, 2-Methyl-1,3-Propandiol, 2-Ethyl-2-Butyl-1,3-Propandiol oder deren Gemische, wobei das molare Verhältnis des Kettenverlängerers b1) zum Kettenverlängerer b2) 10:1 bis 1:4 beträgt.

Als Komponente c) werden solche mit im Mittel mindestens 1,8 bis höchstens 3,0 zerewitinoffaktiven Wasserstoffatomen und einem zahlenmittleren Molekulargewicht M̅ₙ von 450 bis 10000 eingesetzt.

Insbesondere sind zwei bis drei, bevorzugt zwei Hydroxylgruppen aufweisende Verbindungen bevorzugt, speziell solche mit zahlenmittleren Molekulargewichten M̅ₙ von 450 bis 6000, besonders bevorzugt solche mit einem zahlenmittleren Molekulargewicht M̅ₙ von 600 bis 4500; Hydroxylgruppen aufweisende Polyester, Polyether und Polycarbonate sind insbesondere bevorzugt. Produktionsbedingt enthalten die Polyole oft kleine Mengen an nicht-linearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherpolyole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in einer solchen Menge, dass ein noch thermoplastisch verarbeitbares Produkt entsteht. Die im wesentlichen linearen Polyether-Diole besitzen vorzugsweise zahlenmittlere Molekulargewichte M̅ₙ von 450 bis 6000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren, wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte M̅ₙ von 450 bis 10000 und können einzeln oder in Form von Mischungen untereinander zur Anwendung kommen.

Gegenüber Isocyanaten reagierende, monofunktionelle Verbindungen können in Anteilen bis zu 2 Gew.-%, bezogen auf TPU, als sogenannte Kettenabbrecher g) eingesetzt werden. Geeignet sind z.B. Monoamine, wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die relativen Mengen der zerewitinoffaktiven Verbindungen werden bevorzugt so gewählt, dass das Verhältnis der Summe der Isocyanatgruppen zu der Summe der zerewitinoffaktiven Wasserstoffatome 0,9:1 bis 1,1:1 beträgt.

Die erfindungsgemäßen, thermoplastischen Polyurethane können als Hilfs- und Zusatzstoffe f) bevorzugt bis zu 10 Gew.-%, bezogen auf die Gesamtmenge an TPU, der üblichen Hilfs- und Zusatzstoffe enthalten. Typische Hilfs- und Zusatzstoffe sind Gleitmittel und Entformungsmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Hitze und Verfärbung, Farbstoffe, Pigmente, anorganische und/oder organische Füllstoffe, Weichmacher, fungistatisch und bakteriostatisch wirkende Substanzen und deren Mischungen.

Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Ethylen/Vinylacetatcopolymere, Styrol/Butadiencopolymere sowie andere TPU.

Als Lichtstabilisatoren e) werden vorzugsweise UV-Stabilisatoren, Antioxidantien und/oder HALS-Verbindungen eingesetzt. Nähere Angaben sind der Fachliteratur zu entnehmen und beispielsweise in Plastics Additives Handbook, 2001 5th. Ed., Carl Hanser Verlag, München, beschrieben.

Geeignete Katalysatoren d) sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Wismuthverbindungen, Eisenverbindungen oder Zinnverbindungen, wie Zinndiacetat, Zinndioctoat, Zinndilaurat oder die Zinndialkylsalze aliphatischer Carbonsäuren, wie Dibutylzinndiacetat oder Dibutylzinndilaurat oder ähnliche. Bevorzugte Katalysatoren sind organische Metallverbindungen, insbesondere Titansäureester, Eisen-, Zinn-, Zirkon- und Wismuthverbindungen. Die Gesamtmenge an Katalysatoren in den erfindungsgemäßen TPU beträgt in der Regel vorzugsweise 0 bis 5 Gew.-%, bevorzugt 0 bis 2 Gew.-%, bezogen auf die Gesamtmenge an TPU.

Die Zugabe der Hilfs- und Zusatzstoffe kann während des Herstellprozesses und/oder bei einer zusätzlichen Kompoundierung zum TPU erfolgen.

Die erfindungsgemäßen TPU werden vorzugsweise im Spritzgieß- oder Extrusionsverfahren, wie z.B. Folienextrusion eingesetzt.

Die erfindungsgemäßen TPU werden bevorzugt zur Herstellung von lichtstabilen transparenten Formteilen eingesetzt.

Die Erfindung soll anhand der nachfolgenden Beispiele näher erläutert werden.

Im Folgenden verwendete Abkürzungen:

| | |
|---|---|
| PE 225B | Polyesterdiol mit einem Molekulargewicht von Mₙ = 2250 g/mol; Produkt der Firma Bayer MaterialScience AG |
| A 2220 N | Acclaim^{®} 2220N; Polyetherdiol (Mischether aus C₃ und C₂-Alkylenein-heiten) mit einem Molekulargewicht von Mₙ = 2250 g/mol; Produkt der Firma Bayer MaterialScience AG |
| T2000 | Terathane^{®} 2000; Polytetrahydrofuran mit einem Molekulargewicht Mₙ von 2000 g/mol; Produkt der Firma Invista Inc. |
| T1000 | Terathane^{®} 1000; Polytetrahydrofuran mit einem Molekulargewicht Mₙ von 1000 g/mol; Produkt der Firma Invista Inc. |
| De C2201 | Desmophen^{®} C2201; Polycarbonatdiol auf Basis 1,6-Hexandiol mit einem Molekulargewicht Mₙ von 2000 g/mol; Produkt der Firma Bayer MaterialScience AG. |
| AD 2055 | Baycoll^{®} AD 2055; Poly(Neopentylglykol-1,6-Hexandiol)adipat mit einem Molekulargewicht Mₙ von 2000 g/mol; Produkt der Firma Bayer MaterialScience AG |
| HDI | 1,6-Hexamethylendiisocyanat |
| HDO | 1,6-Hexandiol |
| BDO | 1,4-Butandiol |
| PDO | 1,3-Propandiol |
| 1,2-PDO | 1,2-Propandiol |
| HQEE | 1,4-Di(β-hydroxyethyl)-hydrochinon |
| EG | Ethylenglykol |
| NPG | Neopentylglykol |
| Irganox^{®} 1010 | Antioxidant der Firma Ciba Specialty Chemicals GmbH |
| Tinuvin^{®} 234 | Licht-Stabilisator auf Basis eines Benzotriazols der Firma Ciba Specialty Chemicals GmbH |
| DBTL | Dibutylzinndilaurat |

### Beispiele

### Allgemeine Beschreibung der Herstellung des TPU:

Ein Gemisch aus 1 Mol Polyol (c) mit x Mol eines Kettenverlängerers (b1) und y Mol eines Kettenverlängerers (b2) sowie 0,5 Gew.-% Irganox^{®} 1010 (bezogen auf das gesamte TPU) und 60 ppm DBTL (bezogen auf die Polyolmenge) wurde unter Rühren mit einem Flügelrührer mit einer Drehzahl von 500 Umdrehungen pro Minute (UpM) auf 130°C erhitzt; danach wurden (1+x+y) Mol HDI zugegeben. Anschließend wurde bis zum maximal möglichen Viskositätsanstieg gerührt und dann das TPU ausgegossen. Das Material wurde 30 min. bei 80°C thermisch nachbehandelt und anschließend granuliert. Die genauen Rezepturen (Angaben zu (b1), x, (b2) und y) sind der Tabelle 1 zu entnehmen.

Die Trübung wurde nach ASTM D 1003 an 2 mm dicken Spritzgießplatten, welche mit einem polierten Werkzeug hergestellt wurden, gemessen. Die Werte sind ebenfalls der Tabelle 1 zu entnehmen.

Die Verarbeitbarkeit wurde qualitativ an Spritzgießplatten, die auf einer Spritzgießmaschine hergestellt wurden, beurteilt. Dabei wurde auf die Entformbarkeit und die Oberflächenqualität der Spritzgießplatte geachtet.

**Tabelle 1**

| **Beispiel** | | **Polyol (c) [1 Mol]** | **Kettenverlängerer 1** | **Mol x** | **Kettenverlängerer 2** | **Mol y** | **Trübung [%]** | **Verhältnis HQEE/KV2** | **Verarbeitbarkeit** |
|---|---|---|---|---|---|---|---|---|---|
| **1** | Vergleich | T2000 | HDO | 1,74 | Kein | 0 | 21 | - | gut |
| **2** | Vergleich | PE 225B | BDO | 1,13 | Kein | 0 | 30 | - | gut |
| **3** | Vergleich | AD 2055 | BDO | 0,28 | HDO | 1,12 | 38 | - | gut |
| **4** | Vergleich | 0,7 PE225B/0,3 A 2220N | HDO | 2,47 | Kein | 0 | 15 | - | gut |
| **5** | Vergleich | T1000 | PDO | 1,4 | Kein | 0 | 3 | - | schlecht |
| **6** | Vergleich | T1000 | EG | 1,4 | Kein | 0 | 2,3 | - | schlecht |
| **7** | Vergleich | T1000 | EG | 1 | PDO | 1 | n.g. | - | nicht möglich |
| **8** | Vergleich | T1000 | HQEE | 0,7 | Kein | 0 | 11 | ∞ | gut |
| **9** | Vergleich | T1000 | HQEE | 0,1 | PDO | 1,2 | n.g. | 1:12 | schlecht |
| **10** | Vergleich | T1000 | HQEE | 0,2 | PDO | 1 | n.g. | 1:5 | schlecht |
| **11** | erfindungsgemäß | T1000 | HQEE | 0,35 | PDO | 0,7 | 2,5 | 1:2 | gut |
| **12** | erfindungsgemäß. | T1000 | HQEE | 0,5 | PDO | 0,4 | 4,2 | 5:4 | gut |
| **13** | erfindungsgemäß | T1000 | HQEE | 0,6 | PDO | 0,2 | 9 | 3:1 | gut |
| **14** | erfindungsgemäß | T1000 | HQEE | 0,5 | EG | 0,4 | 8 | 5:4 | gut |
| **15** | erfindungsgemäß | T1000 | HQEE | 0,5 | NPG | 0,4 | 8 | 5:4 | gut |
| **16** | erfindungsgemäß | T1000 | HQEE | 0,5 | 1,2-PDO | 0,4 | 8 | 5:4 | gut |
| **17** | Vergleich | T1000 | HQEE | 0,5 | BDO | 0,4 | 15 | 5:4 | gut |
| **18** | erfindungsgemäß | C2201 | HQEE | 2 | PDO | 1,5 | 3,6 | 4:3 | gut |
| **19** | erfindungsgemäß | A 2220N | HQEE | 1,5 | PDO | 1,5 | 5,8 | 1:1 | gut |
| **20** | Vergleich | Bsp. 11 WO 20/50151 | HQEE | 1,5 | EG | 1,5 | 67 | 1:1 | gut |

| | | | | | | | | | |
|---|---|---|---|---|---|---|---|---|---|
| n.g. = nicht gemessen wegen zu schlechter Oberfläche KV = Kettenverlängerer | | | | | | | | | |

In den Vergleichsbeispielen 1 bis 4 wurden 1,6-Hexandiol, 1,4-Butandiol oder deren Gemische eingesetzt. Dabei wurde zwar eine gute Verarbeitbarkeit erzielt, jedoch lag der Trübungswert deutlich über 10%.

In den Vergleichsbeispielen 5 bis 7 wurden 1,3-Propandiol, 1,2-Ethylenglykol oder deren Gemische eingesetzt, wobei zwar niedrige Trübungswerte erreicht wurden, jedoch war die Verarbeitbarkeit sehr schlecht oder sogar nicht möglich.

In den Vergleichsbeispielen 8 bis 10 wurde entweder HQEE allein oder eine geringe Menge an HQEE mit PDO eingesetzt. Dabei war in Beispiel 8 zwar die Verarbeitbarkeit gut, die Trübung betrug jedoch 11%. In den Beispielen 9 und 10 führten die verhältnismäßig hohen Mengen an PDO zu einem sehr schlecht verarbeitbaren Material, wodurch die Trübungen nicht gemessen werden konnten.

Bei den erfindungsgemäßen Beispielen 11 bis 16 wurde eine Kombination aus HQEE mit PDO, EG, NPG oder 1,2-PDO eingesetzt. Dabei lag die Trübung unterhalb von 10%, und es wurde eine gute Verarbeitbarkeit erzielt.

Das Vergleichsbeispiel 17 beschreibt die Verwendung von HQEE in Kombination mit BDO als Kettenverlängerer. Dabei wurde zwar eine gute Verarbeitbarkeit erzielt, allerdings war der Trübungswert mit 15% deutlich zu hoch.

Die erfindungsgemäßen Beispiele 18 und 19 beschreiben die Verwendung einer Kombination von HQEE mit PDO mit einem Polycarbonatdiol bzw. einem C-3/C-2 Ether als Polyol. Dabei wurde sowohl eine gute Verarbeitbarkeit als auch die gewünschten niedrigen Trübungswerte erreicht.

Das Vergleichsbeispiel 20 entspricht Beispiel 11 aus der Anmeldung WO 02/050151 und beschreibt den Einsatz von HQEE mit EG und einem C-3/C-2 Ether als Polyol und MDI als Diisocyanat. Zwar war die Verarbeitbarkeit gut, der Trübungswert lag jedoch mit 67% deutlich zu hoch.

## Patentansprüche

1. Lichtstabile, thermoplastische Polyurethane mit einer Trübung von weniger als 10% gemäß ASTM D-1003, die erhältlich sind aus
a) 1,6-Hexamethylendiisocyanat (1,6-HDI) und ggf. weiteren von 1,6-HDI verschiedenen aliphatischen Diisocyanaten,
b) einer Kettenverlängerungskomponente bestehend aus
b1) 1,4-Di(β-hydroxyethyl)-hydrochinon und
b2) mindestens einem Kettenverlängerer bestehend aus einem Diol mit 2 oder 3 Kohlenstoffatomen in der Kette zwischen den beiden OH-Gruppen,
wobei das molare Verhältnis des Kettenverlängerers b1) zum Kettenverlängerer b2) 10:1 bis 1:4 beträgt,
c) mindestens einer Polyol-Komponente mit einem zahlenmittleren Molekulargewicht von 450 bis 10 000 g/mol und im Mittel mindestens 1,8 bis höchstens 3,0 zerewitinoffaktiven Wasserstoffatomen,
wobei das Verhältnis der Anzahl der Isocyanatgruppen in Komponente a) zu der Anzahl der gegenüber Isocyanat reaktiven Gruppen in den Komponenten b), c) und gegebenenfalls g) 0,9:1 bis 1,1:1 beträgt,
gegebenenfalls in Gegenwart von
d) Katalysatoren
und unter Zusatz von
e) 0,1 bis 10 Gew.-%, bezogen auf thermoplastisches Polyurethan, Lichtstabilisatoren,
f) gegebenenfalls Zusatzmitteln und/oder Hilfsstoffen,
g) gegebenenfalls Kettenabbrechern.

2. Verwendung des thermoplastischen Polyurethans gemäß Anspruch 1 zur Herstellung von lichtstabilen, transparenten Formteilen.

3. Verwendung des thermoplastischen Polyurethans gemäß Anspruch 1 im Spritzgieß- oder Extrusions-Verfahren.

## Claims

1. Light-stable, thermoplastic polyurethanes with a haze of less than 10% according to ASTM D-1003, which are obtainable from
a) 1,6-hexamethylene diisocyanate (1,6-HDI) and optionally additional aliphatic diisocyanates other than 1,6-HDI,
b) a chain extension component consisting of
b1) 1,4-di(β-hydroxyethyl)hydroquinone and
b2) at least one chain extender consisting of a diol having 2 or 3 carbon atoms in the chain between the two OH groups,
wherein the molar ratio of chain extender b1) to chain extender b2) is 10:1 1 to 1:4,
c) at least one polyol component having a number-average molecular weight of 450 to 10000 g/mol and an average of at least 1.8 to at most 3.0 Zerewitinoff-active hydrogen atoms,
wherein the ratio of the number of isocyanate groups in component a) to the number of isocyanate-reactive groups in components b), c) and optionally g) is 0.9:1 1 to 1.1:1,
optionally in the presence of
d) catalysts
and with the addition of
e) 0.1 to 10 wt. %, based on thermoplastic polyurethane, of light stabilisers,
f) optionally additives and/or auxiliary substances,
g) optionally chain terminators.

2. Use of the thermoplastic polyurethane according to claim 1 for the production of light-stable, transparent mouldings.

3. Use of the thermoplastic polyurethane according to claim 1 in an injection-moulding or extrusion process.

## Revendications

1. Polyuréthanes thermoplastiques, stables à la lumière avec une turbidité inférieure à 10 % selon ASTM D-1003, lesquels sont obtenus à partir
a) de diisocyanate de 1,6-hexaméthylène (1,6-HDI) et éventuellement d'autres diisocyanates aliphatiques différents du 1,6-HDI,
b) d'un constituant d'allongement de chaîne constitué
b1) de 1,4-di(β-hydroxyéthyl)-hydroquinone et
b2) d'au moins un agent d'allongement de chaîne constitué d'un diol avec 2 ou 3 atomes de carbone dans la chaîne entre les deux groupes OH,
le rapport molaire de l'agent d'allongement de chaîne b1) à l'agent d'allongement de chaîne b2) étant de 10 : 1 à 1 : 4,
c) d'au moins un constituant polyol avec un poids moléculaire moyen en nombre de 450 à 10 000 g/mol et en moyenne d'au moins 1,8 à au plus 3,0 atomes d'hydrogène Zerewitinoff-actifs,
le rapport du nombre des groupes isocyanates dans le constituant a) au nombre des groupes réactifs avec les isocyanates dans les constituants b), c) et éventuellement g) étant de 0,9 : 1 à 1,1 : 1, éventuellement en présence
d) de catalyseurs
et en ajoutant
e) de 0,1 à 10 % en poids, rapporté au polyuréthane thermoplastique, de stabilisateurs à la lumière,
f) éventuellement d'additifs et/ou d'auxiliaires,
g) éventuellement d'agents d'interruption de chaîne.

2. Utilisation du polyuréthane thermoplastique selon la revendication 1 pour la préparation de pièces moulées transparentes, stables à la lumière.

3. Utilisation du polyuréthane thermoplastique selon la revendication 1 dans un procédé de moulage par injection ou d'extrusion.
